# EUROPÄISCHE PATENTSCHRIFT

(11) **EP 0 548 022 B1**
(45) Veröffentlichungstag und Bekanntmachung des Hinweises auf die Patenterteilung: **25.03.1998**
(21) Anmeldenummer: 92810983.4
(22) Anmeldetag: 10.12.1992
(51) Int. Cl.: B01F 7/04

(54) **Vorrichtung zum Mischen und/oder Kneten von Materialien**
Device for mixing and/or kneading of materials
Dispositif pour mélanger et/ou pétrir des matériaux

(30) Priorität: 14.12.1991 DE 4141328
(43) Veröffentlichungstag der Anmeldung: 23.06.1993
(73) Patentinhaber: BUSS AG, 4133 Pratteln (CH)
(72) Erfinder: Henschel, Werner, CH-4304 Giebenbach (CH); Heuberger, Kurt, CH-4492 Tecknau (CH)
(74) Vertreter: Rottmann, Maximilian R.

(56) Entgegenhaltungen:
- EP-A- 0 140 846
- EP-A- 0 333 111
- AU-A- 544 500
- BE-A- 406 453
- DE-C- 902 789
- FR-A- 1 128 377
- GB-A- 486 375
- GB-A- 1 154 635
- US-A- 3 550 201

## Beschreibung

Die vorliegende Erfindung betrifft einen Mantel zum Umschliessen des Arbeitsraums eines Misch- und Knetgehäuseblocks einer Vorrichtung zum Mischen und/oder Kneten von Materialien, in welchem Arbeitsraum sich mindestens ein rotierendes und/oder oszillierendes Arbeitsorgan sowie in den Arbeitsraum hineinragende, aus abrieb- sowie korrosionsbeständigem Material bestehende, als Knetbolzen ausgebildete Erhebungen befinden, welche den Misch- resp. Knetvorgang unterstützen.

Mit solchen Misch- und/oder Knetvorrichtungen werden verschiedenste Materialien zu gewünschten Zwischen- oder Endprodukten verarbeitet. Die in letzter Zeit erfolgte Weiterentwicklung der zu verarbeitenden Materialien bringt es mit sich, dass heute in der Verfahrenstechnik immer extremere Arbeitstemperaturen gefordert werden und diese sehr präzise eingehalten werden müssen.

Um die exakte Einhaltung der Verfahrenstemperatur zu gewährleisten, muss eine Kühl- und Heizeinrichtung vorhanden sein. Zum Temperieren einer solchen Vorrichtung sind im allgemeinen Zirkulationskanäle im Gehäuse vorhanden, in welchen ein Medium zirkuliert. Dieses Medium wird zum Erwärmen der Vorrichtung aufgeheizt und zum Kühlen entsprechend abgekühlt.

Für die Erwärmung solcher Vorrichtungen kommen aber auch Elektroheizungen, welche in Form einer Heizplatte am Gehäuse angebracht sind, zum Einsatz. Die vorgängig erwähnten Zirkulationskanäle dienen bei diesen Vorrichtungen dann nur noch zum Kühlen derselben.

Da die Temperatur der zu verarbeitenden Materialien inzwischen sehr oft 350° C und mehr beträgt, kommt den entsprechenden Kühl- bzw. Wärmeeinrichtungen immer grössere Bedeutung zu. In diesem Zusammenhang ist es besonders wichtig, dass die Zu- resp. Abführung der Wärme in Bezug auf die Vorrichtung gleichmässig erfolgt, d.h. dass das Gehäuse und damit auch der Arbeitsraum mit den darin befindlichen Materialien homogen temperiert wird, so dass auch lokal keine hohen und damit sowohl für das Gehäuse als auch für die zu verarbeitenden Materialien gefährlichen bzw. schädlichen Temperaturen auftreten können.

Muss das Gehäuse der Vorrichtung zum Verarbeiten von Materialien auf eine hohe Temperatur gebracht werden, so muss darauf geachtet werden, dass das in Zirkulationskanälen zirkulierende Medium einerseits genügend Wärme zuführt und diese bei Bedarf wieder entsprechend abführt. Um die gewünschte Temperierung zu ermöglichen und um eine gleichmässige Temperaturverteilung innerhalb des Gehäuses zu gewährleisten, sollten solche Zirkulationskanäle möglichst gleichmässig und konzentrisch um den Arbeitsraum herum angeordnet werden.

Aus der Patentschrift GB-A-1 154 635 ist es bekannt, bei einer Mischvorrichtung einen den Arbeitsraum umschliessenden Mantel, bestehend aus mehreren Schalenteilen, in einem aus zwei Halbschalen bestehenden Gehäuse mittels Schrauben zu befestigen, welche durch das Gehäuse hindurchgeführt sind, wobei ein Teil dieser Schrauben in den Arbeitsraum hineinragen und als Knetbolzen dienen. Mittel zur Temperierung des Arbeitsraumes sind bei dieser Mischvorrichtung nicht vorgesehen.

Bei der Mischmaschine gemäss der im DE-C-902 789 sind das Gehäuse und der den Arbeitsraum umschliessende Mantel im Gegensatz zur Schalenbauweise beim Erfindungsgegenstand in achisaler Richtung unterteilt, wobei ringförmige Mantelteile zum Auswechseln achsial verschiebbar sind. Bei diesem Gehäusekonzept kommen für Heiz- und Kühleinrichtung nur Ringkanäle in Frage, und eine Mantelbefestigung mit radial durch das Gehäuse geführten Schrauben, welche teilweise Knetbolzen bilden könnten, fällt hier sowohl wegen der achsialen Verschiebbarkeit der Mantelteile als auch wegen der Ringkanäle im Gehäuse (zusätzliche Behinderung der Zirkulation) praktisch ganz ausser Betracht. Sämtliche Knetbolzen sind daher bei dieser bekannten Konstruktion ausschliesslich am Mantel ausgebildet. Das Problem einer gleichmässigen Temperaturverteilung, das in diesem Fall allein schon durch die Verwendung von Ringkanälen gegeben ist, stellt sich also hier in ganz anderer Weise.

Aufgabe der Erfindung ist daher, einen Mantel zum Umschliessen des Arbeitsraums eines Misch- und Knetgehäuseblocks einer Vorrichtung zum Mischen und/oder Kneten von Materialien derart auszubilden, dass die Anordnung der zur guten Durchmischung des zu verarbeitenden Materials notwendigen Knetbolzen die optimale Anordnung von Kanälen zur Zirkulation des Mediums in der Vorrichtung nicht beeinträchtigt und somit die notwendigen Zirkulationskanäle, konzentrisch und in genügend grosser Zahl, um den Arbeitsraum herum angeordnet werden können. Ausserdem soll darauf geachtet werden, dass die erfindungsgemässe Lösung kostengünstiger herzustellen ist als die bisherige Ausführung.

Gemäss der Erfindung wird dies erreicht mit einen Mantel zum Umschliessen des Arbeitsraums eines Misch- und Knetgehäuseblocks einer Vorrichtung zum Mischen und/oder Kneten von Materialien, in welchem Arbeitsraum sich mindestens ein rotierendes und/oder oszillierendes Arbeitsorgan sowie in den Arbeitsraum hineinragende, aus abrieb- sowie korrosionsbeständigem Material bestehende, als Knetbolzen ausgebildete Erhebungen befinden, welche den Mischresp. Knetvorgang unterstützen, wobei der Mantel aus zwei zur Anlage an die Innenfläche des im Gehäuseblock befindlichen Innenraums ausgebildete Halbschalen aus abrieb- sowie korrosionsbeständigem Material besteht, wobei ein Teil der Erhebungen ausschliesslich am Mantel befestigt oder zur Bildung einer gemeinsamen Einheit mit diesem einstückig ausgebildet sind, und wobei der Mantel, zur Sicherung im Gehäuse der Vorrichtung, mit Öffnungen zur Aufnahme von durch das Gehäuse führenden Befestigungsorganen versehen ist, welche in den Arbeitsraum hineinragen und so die restlichen Erhebungen bilden.

Vorteilhafte Ausführungsformen des erfindungsgemässen Mantels sind in den abhängigen Ansprüchen beschrieben.

Ausführungsbeispiele werden im folgenden anhand der beiliegenden Zeichnungen erläutert. In den Zeichnungen zeigen:
- Fig.1: einen Querschnitt durch eine Misch- und Knetvorrichtung;
- Fig.2: einen Querschnitt durch ein erstes Ausführungsbeispiel einer Schalenhälfte eines Mantels;
- Fig.3: einen Querschnitt durch ein Ausführungsbeispiel für eine Knetbolzenbefestigung; und
- Fig.4: einen Querschnitt durch ein zweites Ausführungsbeispiel einer Schalenhälfte eines Mantels.

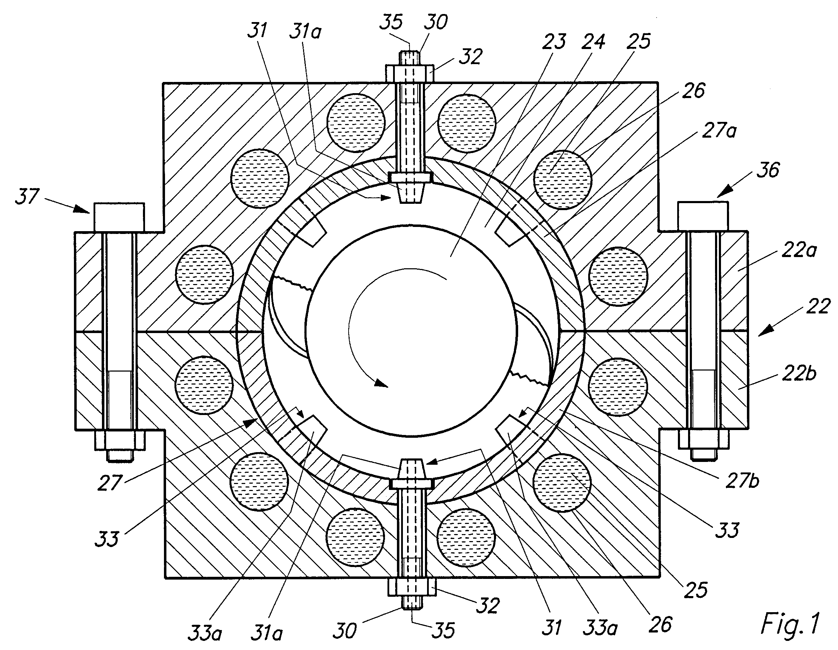

Fig.1 zeigt einen Querschnitt durch eine Ausführungsform einer Misch- und Kneteinrichtung. Die Gehäusehälften 22a und 22b des Gehäuses 22 werden durch Schrauben 36, 37 zusammengehalten. Den Arbeitsraum 24 mit dem darin befindlichen Arbeitsorgan 23 umschliesst ein Mantel, welcher aus zwei Schalenhälften 27a und 27b besteht, die mittels Gewindestiften 30 und Muttern 32 an den Gehäusehälften 22a, 22b befestigt sind. Die in den Arbeitsraum 24 ragenden Teile 31 der Gewindestifte 30 sind als Knetbolzen 31a ausgebildet. Ferner ist eine Anzahl von in den Arbeitsraum 24 hineinragenden Knetbolzen 33a vorgesehen.

Im Gegensatz zu bekannten Lösungen sind die Knetbolzen 33a direkt in den Schalenhälften 27a und 27b verankert, so dass für deren Befestigung das Gehäuse nicht durchbrochen werden muss. Dadurch können die Zirkulationskanäle 26 mit dem darin zirkulierenden Medium 25 konzentrisch um den Arbeitsraum und in genügender Anzahl in den Gehäusehälften 22a und 22b untergebracht werden. Durch diese Art der Anordnung wird sichergestellt, dass die Gehäusehälften 22a, 22b und damit auch das im Arbeitsraum 24 zu verarbeitende Material gleichmässig temperiert wird.

Dadurch, dass weniger störende Gewindestifte 30 mit daran befestigten Knetbolzen 31a durch das Gehäuse 22 der Misch- und Knetvorrichtung geführt werden müssen, kann bei einer Ausführungsform, bei welcher eine Elektroheizung zum Einsatz kommt, die Heizplatte (nicht abgebildet) ebenfalls einfacher und mit grösserer thermischer Kontaktfläche am Gehäuse angebracht werden. Dadurch erfolgt die Wärmeübertragung von der Heizplatte auf das Gehäuse auf einer grösseren Fläche, wodurch die Wärmeübertragung wesentlich gleichmässiger ist.

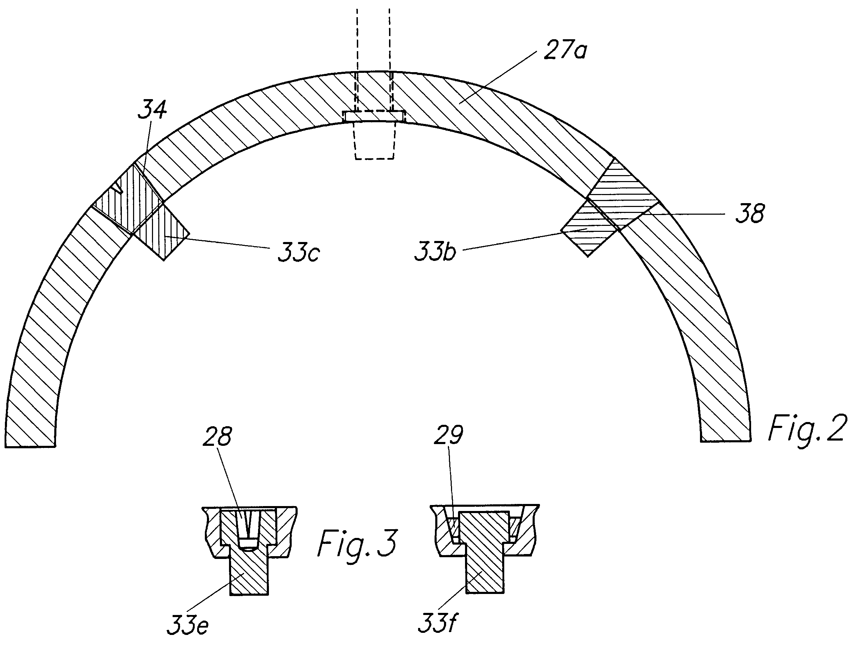

Fig.2 zeigt im Querschnitt die vergrösserte Ausbildung einer ersten Ausführungsform einer Schalenhälfte 27a mit Knetbolzen 33b, 33c. In diesem Ausführungsbeispiel sind zwei bevorzugte Befestigungsarten der Knetbolzen 33b, 33c schematisch dargestellt. Die Knetbolzen 33c sind mittels eines Gewindes 34 in die Schale 27a eingeschraubt, und die Knetbolzen 33b sind mittels einer Reibschlussverbindung 38 in der Schale 27a befestigt. Als Reibschlussverbindung kommt z.B. ein Kegelsitz in Frage. Der Kegelwinkel kann dabei so gewählt werden, dass dadurch die Knetbolzen 33b selbsthemmend an der Schale 27a befestigt sind.

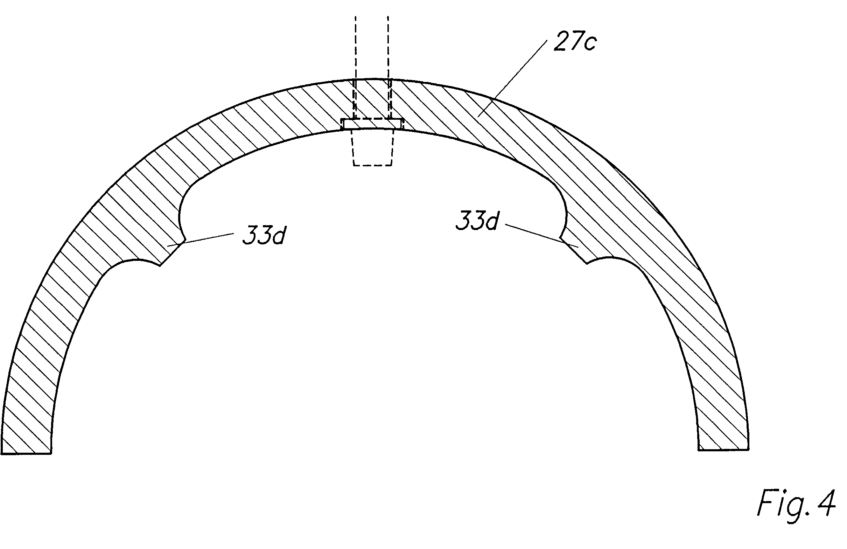

Aus der Fig.3 sind zwei weitere Befestigungsarten der Knetbolzen an der Schale ersichtlich. Ein Knetbolzen 33e weist eine Längsbohrung auf. Nach dem Einsetzen des Knetbolzens 33e in die Bohrung der Schale wird in die Längsbohrung des Bolzens 33e ein konischer Stift 28 getrieben, so dass sich der Bolzen aufweitet und dadurch ebenfalls mittels einer Reibschlussverbindung an der Schalenhälfte befestigt ist. Ein weiterer Knetbolzen 33f wird in einen konischen, in der Schalenhälfte befestigten Ring 29 eingesetzt und dort ebenfalls mittels einer Reibschlussverbindung an der Schale befestigt.

Natürlich können auch Press- und Schrumpfsitze sowie nicht lösbare Verbindungen zur Befestigung der Knetbolzen in der Schale verwendet werden.

Fig.4 zeigt einen Querschnitt durch eine zweite mögliche Ausführungsform einer Schalenhälfte 27c. In diesem Ausführungsbeispiel sind die Knetbolzen 33d einstückig aus der Schale 27c herausgearbeitet.

Natürlich sind auch Ausführungsformen möglich, die eine von den Ausführungsbeispielen abweichende Anzahl Knetbolzen aufweisen. Eine Kombination von einstückig aus der Schale herausgearbeiteten Knetbolzen mit an der Schale befestigten Knetbolzen ist natürlich ebenfalls möglich (diese Kombination ist nicht abgebildet).

Die Schalenhälften mit den daran befestigten Knetbolzen sind so konzipiert, dass sie zusammen eine Einheit für den Einsatz in einer Misch- und/oder Knetvorrichtungen bilden; damit können solche Einheiten auch als Ersatzteile zur Verfügung stehen.

Da die Bolzen einem gewissen Verschleiss unterliegen (der je nach Material und Temperatur unterschiedlich ist), müssen die Bolzen von Zeit zu Zeit ausgewechselt werden. Dieses Auswechseln ist mit der erfindungsgemässen Ausführung wesentlich billiger, da bei den in der Schale befestigten Knetbolzen nur die eigentlichen Knetbolzen und nicht, wie bisher, die Knetbolzen inklusive einer durch das Gehäuse führenden Befestigung ausgewechselt werden müssen. Ausserdem ist damit der anfallende Materialabfall wesentlich geringer, was in der heutigen Zeit eine nicht zu unterschätzende Rolle spielen dürfte.

## Patentansprüche

1. Mantel zum Umschliessen des Arbeitsraums (24) eines Misch- und Knetgehäuseblocks (22) einer Vorrichtung zum Mischen und/oder Kneten von Materialien, in welchem Arbeitsraum (24) sich mindestens ein rotierendes und/oder oszillierendes Arbeitsorgan (23) sowie in den Arbeitsraum (24) hineinragende, aus abrieb- sowie korrosionsbeständigem Material bestehende, als Knetbolzen ausgebildete Erhebungen (31, 33) befinden, welche den Misch- resp. Knetvorgang unterstützen, wobei der Mantel (27) aus zwei zur Anlage an die Innenfläche des im Gehäuseblock befindlichen Innenraums ausgebildete Halbschalen (27a, 27b) aus abrieb- sowie korrosionsbeständigem Material besteht, wobei ein Teil der Erhebungen (33) ausschliesslich am Mantel (27) befestigt oder zur Bildung einer gemeinsamen Einheit mit diesem einstückig ausgebildet sind, und wobei der Mantel (27), zur Sicherung im Gehäuse (22) der Vorrichtung, mit Öffnungen zur Aufnahme von durch das Gehäuse (22) führenden Befestigungsorganen (30) versehen ist, welche in den Arbeitsraum (24) hineinragen und so die restlichen Erhebungen (31) bilden.

2. Mantel nach Anspruch 1, dadurch gekennzeichnet, dass die Halbschalen (27a, 27b) aus gehärtetem Stahl bestehen.

3. Mantel nach Anspruch 1, dadurch gekennzeichnet, dass die Halbschalen (27a, 27b) zumindest teilweise aus Keramik bestehen.

4. Mantel nach Anspruch 1, dadurch gekennzeichnet, dass die Knetbolzen (33a, 33b, 33c) auswechselbar an den Halbschalen (27a, 27b) befestigt sind.

5. Mantel nach Anspruch 4, dadurch gekennzeichnet, dass die Knetbolzen (33c) mittels eines Gewindes (34) an den Halbschalen (27a, 27b) befestigt sind.

6. Mantel nach Anspruch 1, dadurch gekennzeichnet, dass die Knetbolzen (33b) mittels einer Reibschlussverbindung (38) an den Halbschalen (27a, 27b) befestigt sind.

7. Mantel nach Anspruch 1, dadurch gekennzeichnet, dass die Knetbolzen (33b) mittels eines Kegelsitzes an den Halbschalen (27a, 27b) befestigt sind.

8. Mantel nach Anspruch 7, dadurch gekennzeichnet, dass der Kegelwinkel so gewählt ist, dass die Knetbolzen (33a, 33b) selbsthemmend an den Halbschalen (27a, 27b) befestigt sind.

9. Mantel nach Anspruch 1, dadurch gekennzeichnet, dass die Knetbolzen (33a, 33b) durch eine nicht lösbare Verbindung an den Halbschalen (27a, 27b) befestigt sind.

10. Mantel nach Anspruch 1, dadurch gekennzeichnet, dass die Knetbolzen (33a, 33b, 33c, 33d) aus gehärtetem Stahl bestehen.

11. Mantel nach Anspruch 1, dadurch gekennzeichnet, dass die Knetbolzen (33a, 33b, 33c, 33d) zumindest teilweise aus Keramik bestehen.

## Claims

1. Jacket for enclosing the working area (24) of a mixing and kneading housing block (22) of an apparatus for mixing and/or kneading materials, in which working area (24) there ire located it least one rotating and/or oscillating operating element (23) and elevations (31, 33) which project into the working area (24), consist of wear-resistant and corrosion-resistant material, are designed as kneading studs and assist the mixing and/or kneading operation, the jacket (27) comprising two half-shells (27a, 27b) which ire designed for butting against the inner surface of the interior of the housing block and consist of wear-resistant and corrosion-resistant material, some of the elevations (33) being exclusively fastened on the jacket (27) or being designed integrally therewith in order to form a joint unit, and the jacket (27), for securing in the housing (22) of the apparatus, being provided with openings for receiving fastening elements (30) which lead through the housing (22), project into the working area (24) and thus form the rest of the elevations (31).

2. Jacket according to Claim 1, characterized in that the half-shells (27a, 27b) consist of hardened steel.

3. Jacket according to Claim 1, characterized in that the half-shells (27a, 27b) consist, at least partially, of ceramic material.

4. Jacket according to Claim 1, characterized in that the kneading studs (33a, 33b, 33c) are fastened on the half-shells (27a, 27b) such that they can be exchanged.

5. Jacket according to Claim 4, characterized in that the kneading studs (33c) are fastened on the half-shells (27a, 27b) by means of a thread (34).

6. Jacket according to Claim 1, characterized in that the kneading studs (33b) are fastened on the half-shells (27a, 27b) by means of a frictionally locking connection (38).

7. Jacket according to Claim 1, characterized in that the kneading studs (33b) are fastened on the half-shells (27a, 27b) by means of a conical seat.

8. Jacket according to Claim 7, characterized in that the cone angle is selected such that the kneading studs (33a, 33b) are fastened on the half-shells (27a, 27b) in a self-locking manner.

9. Jacket according to Claim 1, characterized in that the kneading studs (33a, 33b) are fastened on the half-shells (27a, 27b) by a non-releasable connection.

10. Jacket according to Claim 1, characterized in that the kneading studs (33a, 33b, 33c, 33d) consist of hardened steel.

11. Jacket according to Claim 1, characterized in that the kneading studs (33a, 33b, 33c, 33d) consist, at least partially, of ceramic material.

## Revendications

1. Enveloppe cylindrique pour entourer la chambre de travail (24) d'un bloc carter de mélange et de malaxage (22) d'un dispositif servant à mélanger et/ou malaxer des matières, chambre de travail (24) dans laquelle sont disposés au moins un organe de travail tournant et/ou oscillant (23) et des parties en surélévation (31, 33) qui font saillie dans la chambre de travail (24) et sont en une matière résistant à l'abrasion et à la corrosion et qui sont réalisées en tant que doigts de malaxage et favorisent l'opération de mélange ou de malaxage, l'enveloppe cylindrique (27) étant constituée de deux demi-coquilles (27a, 27b) en matière résistant à l'usure et à la corrosion et réalisées pour venir en appui sur la surface intérieure de la cavité située dans le bloc carter, tandis que certaines des parties en surélévation (33) sont exclusivement fixées sur l'enveloppe cylindrique (27) ou réalisées d'une pièce avec celle-ci pour former un ensemble unitaire commun et que, pour l'immobilisation dans le carter (22) du dispositif, l'enveloppe cylindrique (27) est pourvue d'ouvertures destinées à recevoir des organes de fixation (30) qui traversent le carter (22) et qui font saillie dans la chambre de travail (24) et constituent ainsi les autres parties en surélévation (31).

2. Enveloppe cylindrique suivant la revendication 1, caractérisée en ce que les demi-coquilles (27a, 27b) sont en acier trempé.

3. Enveloppe cylindrique suivant la revendication 1, caractérisée en ce que les demi-coquilles (27a, 27b) sont au moins en partie en céramique.

4. Enveloppe cylindrique suivant la revendication 1, caractérisée en ce que les doigts de malaxage (33a, 33b, 33c) sont fixés d'une manière remplaçable sur les demi-coquilles (27a, 27b).

5. Enveloppe cylindrique suivant la revendication 4, caractérisée en ce que les doigts de malaxage (33c) sont fixés sur les demi-coquilles (27a, 27b) au moyen d'un filetage (34).

6. Enveloppe cylindrique suivant la revendication 1, caractérisée en ce que les doigts de malaxage (33b) sont fixés sur les demi-coquilles (27a, 27b) au moyen d'une liaison de solidarisation par frottement (38).

7. Enveloppe cylindrique suivant la revendication 1, caractérisée en ce que les doigts de malaxage (33b) sont fixés sur les demi-coquilles (27a, 27b) au moyen d'un siège conique.

8. Enveloppe cylindrique suivant la revendication 7, caractérisée en ce que l'angle du cône est choisi de façon que les doigts de malaxage (33a, 33b) soient fixés d'une matière autobloquante sur les demicoquilles (27a, 27b).

9. Enveloppe cylindrique suivant la revendication 1, caractérisée en ce que les doigts de malaxage (33a, 33b) sont fixés sur les demi-coquilles (27a, 27b) au moyen d'une liaison non séparable.

10. Enveloppe cylindrique suivant la revendication 1, caractérisée en ce que les doigts de malaxage (33a, 33b, 33c, 33d) sont en acier trempé.

11. Enveloppe cylindrique suivant la revendication 1, caractérisée en ce que les doigts de malaxage (33a, 33b, 33c, 33d) sont au moins en partie en céramique.
